# EUROPEAN PATENT APPLICATION

(11) **EP 3 598 378 A1**
(43) Date of publication of application: **22.01.2020**
(21) Application number: 18184765.8
(22) Date of filing: 20.07.2018
(51) Int. Cl.: G06Q 50/04, G06Q 10/06, G06F 17/30, G06N 5/02, G06N 5/04, G05B 19/418

(54) **METHOD AND SYSTEM FOR PROVIDING TRANSPARENCY IN AN AUTONOMOUS PRODUCTION SYSTEM**

(71) Applicant: Siemens Aktiengesellschaft, 80333 München (DE)
(72) Inventor: Gocev, Ivan, 81739 München (DE); Grimm, Stephan, 81825 München (DE); Albrecht, Sebastian, 85399 Hallbergmoos (DE)

(57) **Abstract**

An autonomous production system (APS) comprising:
a transformation unit (1) adapted to transform an ontology representation of actions of the autonomous production system into a corresponding planning representation;
an artificial intelligence, AI, planning unit (2) adapted to compute an action plan (AP) comprising a sequence of instantiated actions (a) based on the planning representation; and
a retransformation unit (3) adapted to transform the computed action plan (AP) into an ontology language representation (oAP) providing transparency information about the computed action plan (AP).

## Description

The invention relates to a method and apparatus for providing transparency in an autonomous production system.

Production systems can comprise a plurality of production facilities, subsystems and components, in particular, controllers, actuators and sensors. The machines of a production system become increasingly smart and are equipped with increasing autonomy to flexibly steer high variant production. However, this implies that the decisions and actions taken by the autonomous production system are not easily transparent to human users, such as the operators of a manufacturing plant. The intransparency of actions taken by an autonomous production system may lead to a lack of trust in the respective autonomous system. Further, the intransparency of actions performed by an autonomous production system makes it difficult for a user to decide whether to overrule or change an action performed by the autonomous production system. This in turn can lead to wrong decisions made by the user because in a conventional production system the user is not sufficiently assisted in taking the right decisions because of the inherent intransparency.

Accordingly, it is an object of the present invention to provide an autonomous production system providing transparency to actions performed by the autonomous production system during the production process.

This object is achieved according to a first aspect of the present invention by an autonomous production system comprising the features of claim 1.

The invention provides according to the first aspect of the present invention an autonomous production system comprising a transformation unit adapted to transform an ontology representation of actions of the autonomous production system into a corresponding planning representation,
an artificial intelligence, AI, planning unit adapted to compute an action plan comprising a sequence of instantiated actions based on the planning representation, and
a retransformation unit adapted to transform the computed action plan into an ontology language representation providing transparency information about the computed action plan.

The autonomous production system according to the first aspect of the present invention makes decisions and/or actions taken by the autonomous production system transparent to a user by explaining the decisions and/or actions to the user, e.g. via a graphical user interface.

The present invention provides according to a further aspect a method for providing transparency in an autonomous production system providing the features of claim 13.

The invention provides according to the second aspect a method for providing transparency in an autonomous production system comprising the steps of:
transforming an ontology representation of actions to be performed by the autonomous production system into a corresponding planning representation,
computing by an AI planning unit an action plan comprising a sequence of instantiated actions based on the planning representation of the actions, and
transforming the computed action plan into an ontology representation process to provide transparency information about the computed action plan.

In a possible embodiment of the autonomous production system according to the first aspect of the present invention the ontology representation of actions of the autonomous production system comprise a web ontology language, OWL, representation.

In a further possible embodiment of the autonomous production system according to the first aspect of the present invention the planning representation of actions of the autonomous production system comprises a planning domain definition language, PDDL representation.

In a further possible embodiment of the autonomous production system according to the first aspect of the present invention the transformation unit and the retransformation unit have access to a mapping memory which stores a mapping table of mappings between the ontology representation of actions and a corresponding planning representation of actions.

In a further possible embodiment of the autonomous production system according to the first aspect of the present invention each action the table stored in the mapping memory comprises in the ontology representation and in the planning representation of
at least one action precondition,
action parameters and
at least one action effect.

In a further possible embodiment of the autonomous production system according to the first aspect of the present invention an ontology of a domain of the autonomous production system is stored in a memory or database and comprises a representation of states of a domain of said autonomous production system including an initial state and a goal state.

In a further possible embodiment of the autonomous production system according to the first aspect of the present invention the autonomous production system further comprises a state evolution unit, SEU, which is configured to evolve the initial state of the domain by applying the instantiated actions of the computed action plan transformed into its ontology representation into an intermediate state of interest of the domain queried by a user.

In a still further possible embodiment of the autonomous production system according to the first aspect of the present invention the system further comprises a logical reasoning unit, LRU, configured to compute explanatory justifications for the preconditions of the instantiated actions applied by the state evolution unit.

In a further possible embodiment of the autonomous production system according to the first aspect of the present invention the system further comprises an explanation generation unit, EGU, configured to generate automatically the transparency information comprising human readable explanation text and/or a machine readable explanation files on the basis of the explanatory justifications computed by the logical reasoning unit.

In a further possible embodiment of the autonomous production system according to the first aspect of the present invention the readable explanation text generated by the explanation generation unit, EGU, is output via a user interface, UI, to a user of the system.

In a further possible embodiment of the autonomous production system according to the first aspect of the present invention the explanation generation unit, EGU, of the system is adapted to perform natural language processing of the justifications computed by said logical reasoning unit, LRU, to generate automatically an explanation text output via the user interface, UI, to a user of the autonomous production system.

In a still further possible embodiment of the autonomous production system according to the first aspect of the present invention the action plan computed by the AI planning unit comprising a sequence of instantiated actions is executed by an execution engine, EE, of said autonomous production system.

In a still further possible embodiment of the autonomous production system according to the first aspect of the present invention the transparency information generated by said explanation generation unit EGU is evaluated to trigger the execution of the action plan by said execution engine EE.

In a further possible embodiment of the autonomous production system according to the first aspect of the present invention the execution engine EE comprises a controller adapted to generate control signals applied to actuators of said autonomous production system during execution of the instantiated actions of the action plan.

In a still further possible embodiment of the autonomous production system according to the first aspect of the present invention the transparency information comprises explanations indicating at least one reason for a specific action being included or not being included in the action plan computed by said AI planning unit.

In the following possible embodiments of the different aspects of the present invention are described in more detail with reference to the enclosed figures.
- Fig. 1: shows a schematic diagram of a possible exemplary embodiment of an autonomous production system according to an aspect of the present invention;
- Fig. 2: shows a block diagram of a possible exemplary embodiment of an autonomous production system according to an aspect of the present invention;
- Fig. 3: shows schematically an action plan AP for illustrating the operation of the autonomous production system as illustrated in Figs. 1, 2;
- Fig. 4: shows a flowchart of a possible exemplary embodiment of a method for providing transparency in an autonomous production system according to a further aspect of the present invention, and
- Fig. 5: shows a screenshot of a tool using the method according to the present invention.

An autonomous production system APS according to the present invention can comprise a complex system providing a plurality of subsystems and components including control entities, actuators and/or sensors. The actuators of the autonomous production system APS are controlled by controllers of the autonomous production system according to instantiated actions of an action plan AP. The autonomous production system APS can comprise an apparatus adapted to generate an action plan AP which can be supplied by possible implementation of at least one execution engine of the autonomous production system APS having a controller adapted to generate control signals applied to actuators of the autonomous production system during execution of the instantiated action of the action plan AP.

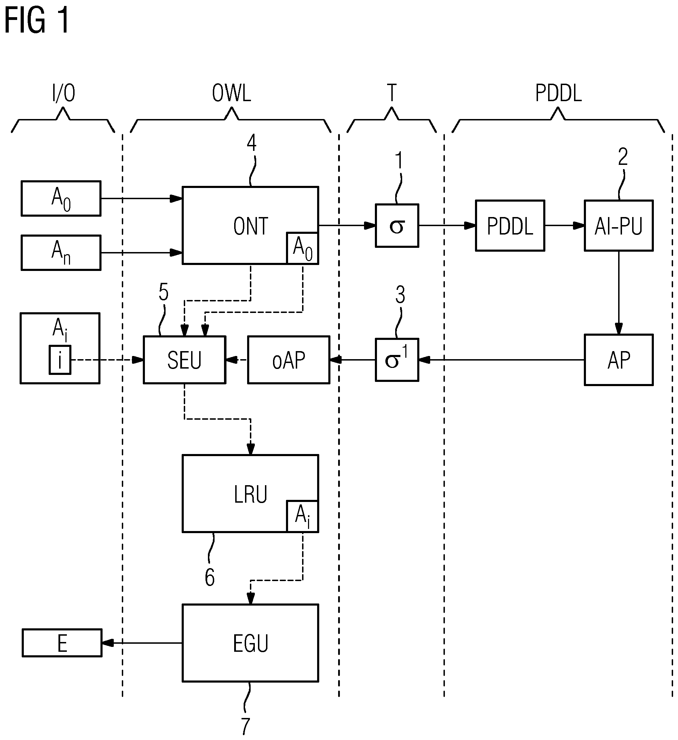

The autonomous production system can comprise an apparatus adapted to provide transparency information about the computed action plan AP before or during execution of the action plan AP. As can be seen in the schematic diagram of Fig. 1 the main components of the apparatus adapted to provide transparency information about the action plan AP comprise a transformation unit 1, an artificial intelligence, AI, planning unit 2 and a retransformation unit 3.

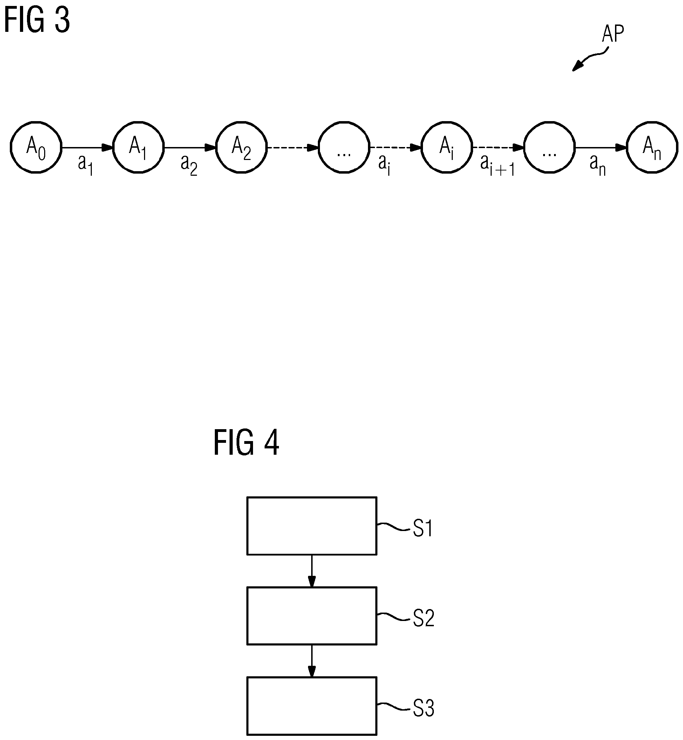

The transformation unit 1 used in the autonomous production system APS according to the first aspect of the present invention is adapted to transform an ontology representation of actions of the autonomous production system APS into a corresponding planning representation. The artificial intelligence, AI, planning unit 2 is adapted to compute an action plan AP such as illustrated schematically in Fig. 3 comprising a sequence of instantiated actions (aᵢ) based on the planning representation. Further, the retransformation unit 3 is adapted to transform the computed action plan AP into an ontology language representation providing transparency information about the computed action plan AP. The ontology representation of the actions of the autonomous production system comprise in a preferred embodiment a web ontology language, OWL, representation. Further, the planning representation APS comprises in a preferred embodiment a planning domain definition language, PDDL, representation.

The web ontology language OWL comprises knowledge representation languages or ontologies. Ontologies describe taxonomies and classification networks essentially defining a structure of knowledge in various technical domains. OWL ontologies are characterized by formal semantics. They can be built upon worldwide web consortiums W3C XML standards or objects called resource description frameworks RDF. The W3C standard web ontology language OWL and associated reasoning mechanisms can be used for knowledge representation and reasoning in information systems.

The planning representation used in the system according to the present invention comprises in a possible embodiment a planning domain definition language PDDL representation. The planning problem is separated in two major parts including a domain description and a related problem description.

The domain description can consist of a domain name definition, definition of requirements, a definition of object-type hierarchy, a definition of constant objects, a definition of predicates and a definition of possible actions. The actions can comprise parameters, i.e. variables that can be instantiated with objects, preconditions and effects. Effects of actions can also be conditional.

The problem description can comprise a problem name definition, the definition of the related domain name, a definition of all possible objects, an initial state of the planning environment and a definition of at least one goal state.

The PDDL representation uses a PDDL language which forms a formal language for describing action planning domains and problems in declarative way as an input to an AI planner that can compute action plans AP as solutions.

As illustrated in Fig. 1 the transformation unit 1 transforms an ontology representation ONT, in particular a web ontology, OWL, representation of actions into a planning representation, in particular a planning domain definition language, PDDL, representation. In a possible embodiment, the transformation unit 1 and the retransformation unit 3 can have access to a common mapping memory which stores a mapping table of mappings between the ontology representation of actions and a corresponding planning representation of actions. Each action within the mapping table stored in the memory can comprise in the ontology representation and in the planning representation information about the respective action in the respective syntax, in particular the OWL syntax and PDDL syntax. Each action within the table can comprise in an OWL ontology representation and in a PDDL representation at least one action precondition, action parameters and at least one action effect.

A possible example for a table stored in the mapping memory is given in the below table:

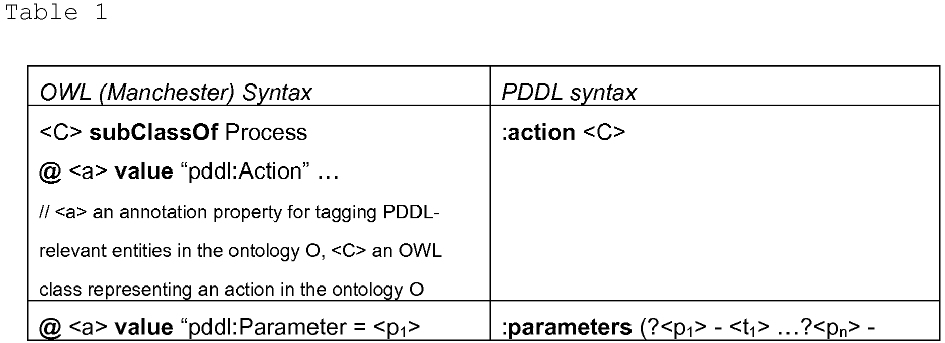

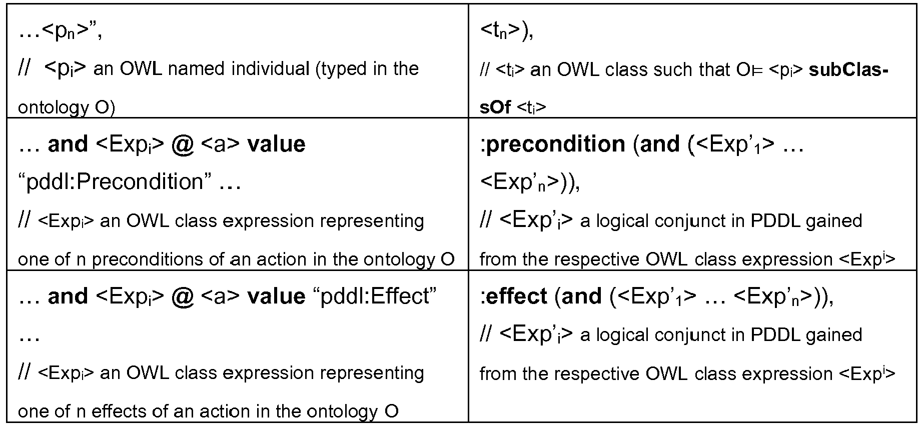

The ontology ONT can comprise a domain and problem ontology which can be specified in a web ontology language, OWL, representation. Ontology can be stored in a memory or database to which the transformation unit 1 has access as illustrated in the schematic diagram of Fig. 1. The ontology of a domain of the autonomous production system APS can be stored in memory or database 4 as illustrated in the schematic diagram of Fig. 1. The stored ontology can comprise a representation of states of the domain of said autonomous production system APS including an initial state A₀ and a goal state Aₙ.

A state evolution unit 5 is configured to evolve the initial state of the domain by applying the instantiated actions of the computed action plan AP transformed into its ontology representation oAP into an intermediate state of interest Aᵢ of the domain queried by a user.

The autonomous production system APS comprises in a possible embodiment further a logical reasoning unit 6 which is configured to compute explanatory justifications for the preconditions of the instantiated actions applied by the state evolution unit 5. An explanation generation unit 7 is configured to generate automatically transparency information on the basis of the explanatory justifications computed by the logical reasoning unit 6. The generated transparency information can comprise human readable explanation text output via a user interface UI and/or machine readable explanation files output via data interface DI of the autonomous production system APS. In a further embodiment, the explanation generation unit 7 is adapted to perform natural language, NL, processing of the justifications J computed by the logical reasoning unit 6 to generate automatically an explanation text output via user interface to a user of the autonomous production system APS. In a possible embodiment, the transparency information can comprise explanations E indicating at least one reason for a specific action being included or not being included in the action plan AP computed by the AI planning unit 2 of the system.

The autonomous production system APS of the present invention as illustrated schematically in Fig. 1 employs an action planning mechanism from symbolic artificial intelligence AI based on domain and action knowledge declaratively specified, e.g. in the PDDL language. The autonomous production system APS comprises an artificial intelligence planning unit 2 capable of computing an appropriate sequence of actions, i.e. an action plan AP which can be used for building a product from parts or raw materials.

The autonomous production system APS can for instance comprise a robot assembly system which is adapted to assemble final product from parts, e.g. a vehicle or car from basic parts such as wheels, axles, chassis, etc. performing the right actions at symbolic level in the correct sequence, like pick-up wheel, insert it onto axles etc. The autonomous production system APS gets a description of the parts and its assembly capabilities (skills) as an input and computes intermediate actions such as the correct placing of the car's chassis into a fixture in the right position for its bottom side to be accessible for following actions that insert the axles. The autonomous production system APS according to the first aspect of the present invention has the additional ability to explain its computed actions to a user making its decision process transparent to the user and assisting the user in controlling the autonomous production system APS. In an exemplary explanation for an action performed by the autonomous production system could be like "put chassis into fixture upside down". This action can be explained along the lines of "the action achieves that the chassis is fixed within the fixture and its bottom side is accessible to the assembly robot for properly inserting an axle as a required following action".

The transparency information provided by the autonomous production system APS according to the present invention can comprise explanations E indicating to a user at least one reason for a specific action being included or not being included in the action plan AP computed by the AI planning unit 2 of the system. Accordingly, the explanations E for actions can comprise why-explanations indicating why the autonomous production system has taken or performed a certain action and why-not-explanations indicating why the autonomous production system has not performed a specific alternative action at a certain point.

The autonomous production system APS according to the present invention does combine ontologies and artificial intelligence planners for providing transparency information about a computed action plan AP. The autonomous production system APS uses a semantically rich ontological vocabulary to provide explanations that a user has a good understanding of. In a possible embodiment, the system connects the declarative descriptions in the PDDL problem and domain specification to set off the vocabulary in the respective ontology. In the autonomous production system according to the present invention the used artificial intelligence, AI, planning unit 2 is exchangeable depending on the requirements of the system and/or user. The explanation mechanism provided by the autonomous production system according to the present invention does not rely on a specific implementation of the artificial intelligence, AI, planning unit 2 and thus has a broad range of use.

In the autonomous production system according to the first aspect of the present invention ontologies are used to capture the vocabulary of the domain such as assembly in manufacturing in a semantically rich way with explicit domain concepts (like wheel, axle, ...) and the relations (like is part of, is connected to, ...). In a possible embodiment, a standardized OWL ontology language can be used for representation of the actions of the autonomous production system APS.

PDDL domain and problem specification can be generated from the ontological representation that captures planning knowledge (skills/capabilities of the autonomous production system) next to domain knowledge of the objects to be handled.

Any conventional artificial intelligence, AI, planner that understands planning domain definition language PDDL representation can be used to compute the action plan AP as a solution to a task or goal environment state posed to the autonomous production system APS based on the generated PDDL problem and domain specifications.

Since the PDDL code can be generated from statements using an ontological vocabulary, the resulting action plan AP can be interpreted in terms of this vocabulary by considering the inverse transformation of the generation process. Thus, the instantiated actions from the action plan AP can be expressed in terms of the domain ontology used in the first place.

For explaining a specific action (why) or the absence of an alternative action (why not) OWL justifications J can be computed by the logical reasoning unit 6 for respective ontology interferences which are related to the actions of the action plan. Since the calculated justifications J explain how these interferences can be deduced from the knowledge in the ontology, they yield an explanation for the actions of the action plan AP, building on the domain vocabulary that the user understands well.

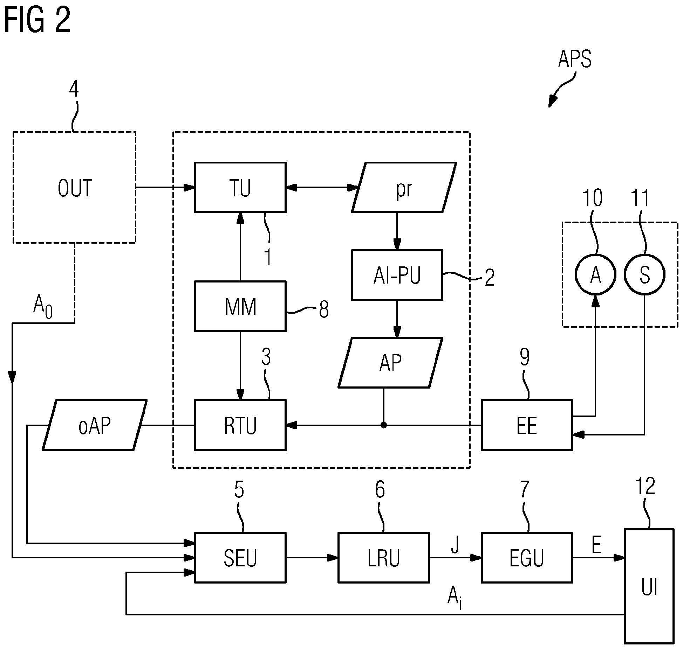

Fig. 2 shows a block diagram of a possible exemplary embodiment of an autonomous production system APS according to the present invention using the explanation mechanism illustrated in Fig. 1. The autonomous production system APS as illustrated in Fig. 2 comprises an apparatus including the transformation unit 1, the artificial intelligence planning unit 2 and the retransformation unit 3. As can be seen from the embodiment of Fig. 2, the transformation unit 1 and the retransformation unit 3 have both access to a common local or remote mapping memory 8 which stores a mapping table of mappings between an ontology representation of actions (e.g. OWL representation) and a corresponding planning representation of actions (PDDL representation). Each action within the stored table comprises an ontology representation (OWL) and a planning representation (PDDL) of at least one action precondition, action parameters and at least one action effect. The mapping memory 8 can for instance store a mapping table as illustrated in the above table where action, parameters, precondition and effect are indicated in an OWL syntax and a PDDL syntax. The artificial intelligence, AI, planning unit 2 computes an action plan AP on the basis of a planning representation PR of the actions to be performed by the autonomous production system. In general, such an action plan AP comprises an initial state A₀ and a final goal state Aₙ as illustrated in the schematic diagram of Fig. 3. The action plan AP comprises a plurality of intermediate states A₁ to Aₙ₋₁. An instantiated action (a) has to be performed to reach the next intermediate state of the action plan. The action plan AP computed by the AI planning unit 2 comprising the sequence of instantiated actions (a) can be executed in a possible embodiment by an execution engine 9 of the autonomous production system APS. In a possible embodiment, the execution engine 9 can comprise a controller adapted to generate control signals applied to actuators 10 of the autonomous production system APS during execution of the instantiated actions (a) of the action plan AP. The execution engine 9 can also receive sensor data from sensors 11 of the autonomous production system APS as illustrated in the embodiment of Fig. 2. The actuators 10 are controlled by the execution engine 9 according to the actions of the action plan AP computed by the AI processing unit 2. As can be seen in Fig. 2, the computed action plan AP is supplied to both, to the execution engine 9 and to the retransformation unit 3. The retransformation unit 3 transforms the computed action plan AP into an ontology language representation oAP to provide transparency information about the computed action plan AP. In the illustrated embodiment of Fig. 2, the state evolution unit 5, the logical reasoning unit 6 and the explanation generation unit 7 are adapted to process the ontology language representation of the action plan AP to generate automatically transparency information comprising explanations E about the actions performed by the actuators 10 according to the action plan AP executed by the execution engine 9. In a possible embodiment, the explanations E are generated during execution of the action plan AP by the execution engine 9. In a further possible embodiment, the explanations E are generated in a simulation operation mode of the system before the respective action is physically performed by the actuator 10 of the autonomous production system. In a further possible embodiment, each instantiated action of the computed action plan AP is performed step by step after a user has approved the respective action taking into account the explanation E concerning of the respective action to be performed. In a possible embodiment, the explanations E provided by the explanation generation unit 7 are output to a user of the autonomous production system via a user interface 12 as illustrated in Fig. 2. In a possible embodiment, the user can input a state of interest Aᵢ via the user interface 12 applied to the state evolution unit 5 as illustrated in Fig. 2. The state evolution unit 5 is configured to evolve the initial state A₀ of the domain specified in the ontology ONT applying the instantiated actions (aᵢ) of the computed action plan AP transformed into its ontology representation oAP into the intermediate state of interest of the domain queried by the user U via means of the user interface 12. The logical reasoning unit 6 computes in a possible embodiment explanatory OWL justifications J for the preconditions of the instantiated actions (aᵢ) applied by the state evolution unit 5 to reach the intermediate state of interest Aᵢ. The explanation generation unit 7 provides automatically the transparency information for the user comprising in a possible embodiment human readable explanation text output the user interface 12. In a possible embodiment, the explanation generation unit 7 can also provide machine readable explanation files output via a data interface to a controller of the autonomous production system APS. The explanation generation unit 7 can in a possible implementation perform natural language processing of OWL justifications J computed by the logical reasoning unit 6 to generate automatically the explanation text output via the user interface 12 for the user of the autonomous production system APS.

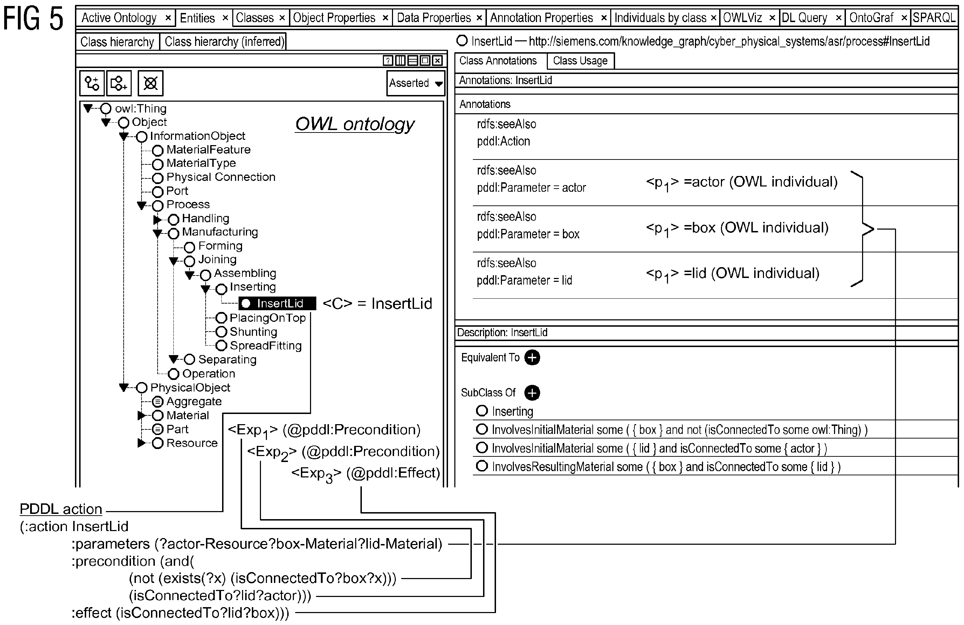

Fig. 5 shows a screenshot for illustrating a possible operation of the autonomous production system APS and the method for providing transparency in such an autonomous production system according to the present invention. Fig. 5 illustrates a screenshot of an OWL ontology editing tool (Protege) with an ontology for the domain of discrete manufacturing. Fig. 5 exemplifies the use of the transformations performed by the explanation mechanism according to the present invention in a context of a scenario for planning actions of an assembly robot whose task is to mount electronic parts in a box and finally insert a lid on top of the box to close the final product. In the exemplary domain illustrated in the screenshot of Fig. 5 concepts (= OWL classes) like Process, Material and Production Cell are relevant and are linked by relations (= OWL properties) like isPartOf, isConnectedTo or performs. Actions are modeled as so called "skills" in form of process classes (subclasses of Process) with restrictions on their properties for involved material. For skill InsertLid selected in the left-hand taxonomy tree illustrated in Fig. 5, its restrictions are illustrated on the lower right-hand panel.

It indicates that InsertLid is a subclass of the process of inserting with restrictions such as involving as material a box that is itself not connected to anything, and so forth. As illustrated in Fig. 5 right above it is indicated which parts of the ontological model of the skill map to PDDL entities for forming a respective action according to the variables (using the notation <>). It is also indicated how these entities map to the PDDL syntax elements in the complete PDDL action shown in the lower part of the screenshot. The OWL class name InsertLid (<C>) is taken for the PDDL action's name while the complex logical expressions from the ontology form the basis for composing respective preconditions and effects in PDDL. The transformation table can be used to transform actions from their representation in OWL to PDDL and vice versa. The transformation table can be stored in a possible embodiment in the mapping memory 8 of the system as illustrated in Fig. 2.

The autonomous production system APS according to the present invention can provide in a possible implementation different kinds of explanations concerning actions performed by the autonomous production system according to the action plan AP. These explanations E can comprise why-explanations (i.e. why an action was included in the action plan AP at a certain point) and why-not-explanations (i.e. why was an alternative action not included in the action plan at a certain point). To achieve a why-explanation an OWL justification J for the respective action's precondition being true can be computed and its content can be presented to the user via the user interface 12. For a why-not-explanation, the OWL justification J can be computed for the respective action's precondition being false and its content can be presented to the user. With respect to the why-not-explanations, these explanations concern an action that is not part of the action plan AP (at least not at the relevant point in the action plan). This requires the user to construct an alternative instantiation of a hypothetic action for a why-not-explanation as additional input. For generation of an explanation, an action plan AP is considered as a result of a classical AI planner as illustrated schematically in Fig. 1. The action plan AP performs a sequence of actions (a) with parameters instantiated by specific values. An example of (an excerpt of) an action plan AP is as follows:

```
     PickLid(?actor = robot1, ?lid = lid1)
     InsertLid(?actor = robot1, ?box = box1, ?lid = lid1)
```

To generate an accurate explanation for why or why not an action occurs or has occurred, it is necessary to have knowledge of the state in which the environment is at that specific moment in time. This is necessary in such a black-box approach with respect to the artificial intelligence, AI, planner, since in the ontology is only the initial state available and not the intermediate states that successively lead to the goal state by applying the instantiated actions in the action plan AP as a result of the artificial intelligence planning unit 2. For generating the explanations, the action plan AP can be considered independently from its execution. In a possible embodiment, the action plan AP can have already been executed and the user gets the explanations for the performed actions. However, the explanations E can also be used by the user for verification prior to execution of the action plan AP by the execution engine 9, in particular for safety reasons.

An approach to solve this is inferring the next state of the environment as the algorithm progresses further into the plan and generates explanations E for the applied actions.

A pseudo-code for the mechanism according to the present invention is given below:

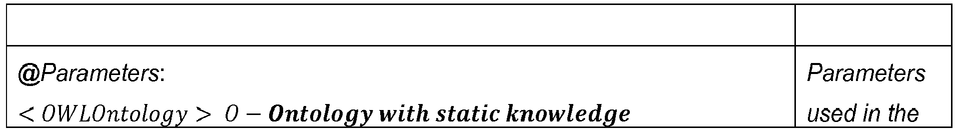

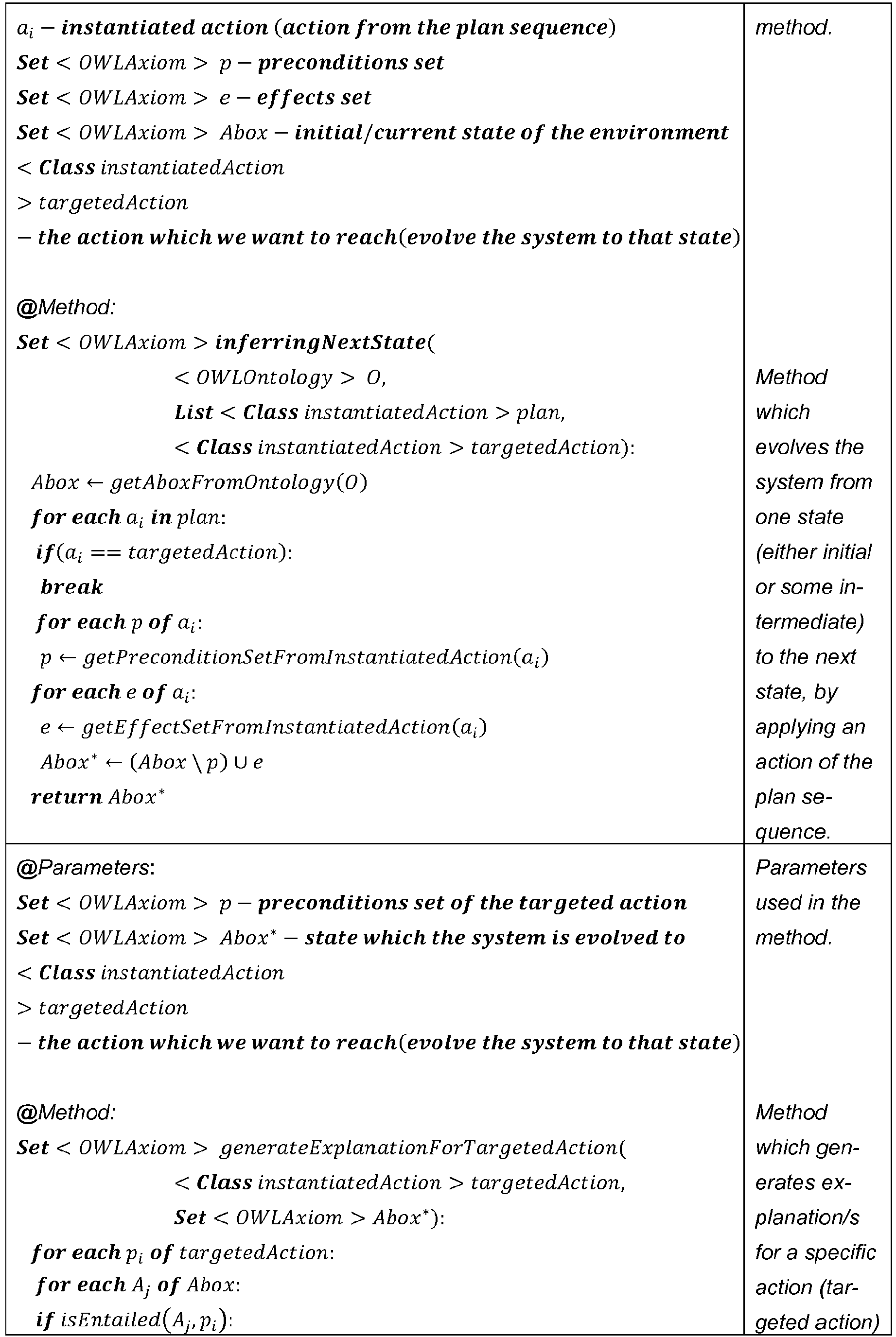

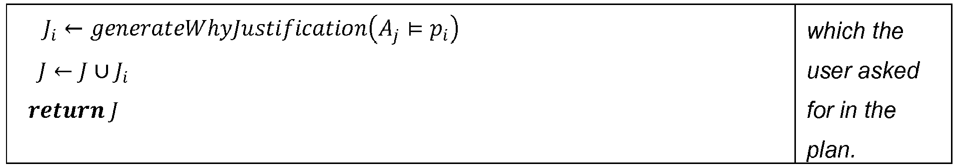

An instantiated action can be parsed. The action can be executed and the state in which the environment is can be transposed to the state caused by the executed action. The A-box of the ontology does represent the state of the environment as well as the relations between the different objects in it. An A-box of an OWL ontology is the part of the ontology which makes statements about specific individual objects and situations. This is contrary to a T-box which makes more general statements about classes of objects. In the method according to the present invention, the use of the A-box is relevant for representing a specific state of the environment which needs to be computed for explaining a particular action while the T-box knowledge remains the same for all such states. The A-box of the ontology represents the state of the environment as well as the relations between the different objects in it. The individuals represent the objects and the object properties represents their relations. Inferring to the next state in which the system can be found is applying the effects of a specific action that can be executed as long as certain preconditions of that action are fulfilled. The method can infer the next state of the system by applying those effects of said specific action to the action plan AP, therefore updating the A-box of the ontology or the state of the environment according to the above illustrated pseudo-code. The method can be applied for more than one action depending on which state of interest is to be reached and which action in the action plan AP has to be explained.

After having reached a certain state in the environment, a justification set (i.e. a collection of each justification of the entailments) can be generated to construct an explanation of why an action has been performed. A justification set is the minimal set of statements that are required to substantiate explanation for an action. In a possible embodiment, a user may ask a question within the scope of the action plan to get explanations. Depending on which part of the action plan AP queried by the user the method does evolve the system to the queried state of interest while generating at the same time a justification set as a collection of individual justifications for the specific entailments.

The following table shows an example based on the above action plan AP and an ontology O that contains statements as follows:

| | | |
|---|---|---|
| O | { Lid ⊆ Material, | "anv Lid is a Material" |
| = | Robot ⊆ Manipulator | "any Robot is a Manipulator" |
| | Manipulator ⊆ Machine, | "any Manipulator is a Machine" |
| | Manipulator ⊆ ∃canPickObject(Lid) | "a Manipulator can pick up a Lid" |
| | Box ⊆ Material | "anv box is a Material" |
| | box1 := box, | "box1 is same as box" |
| | robot1 := robot, | "robot1 is same as robot" |
| | lid1 := lid, | "lid1 is same as lid" |
| | Lid(lid1 ), | "lid1 is a type of Lid" |
| | Box(box1), | "box1 is a type of Box" |
| | Robot(robot1), | "robot1 is a type of Robot" |
| | pick ⊆ involvesMaterial and not ∃isConnectedTo.T(lid1), | "pick offers a precondition which states that lid1 is not connected to some thing" |
| | pick ⊆ involvesMaterial and not ∃isConnectedTo.T(robot1), | "pick offers a precondition which states that robot1 is not connected to some thing" |
| | holds(Machine, Material), | "A machine gives the possibility at a certain point to hold a material" |
| | holdsMagnetically(Machine, Lid) } | "A machine gives the possibility at a certain point to hold a Lid via a magnet (specialized version of holding)" |

For example, one can consider a why-explanation for the second action in the action plan AP which corresponds to asking: "why was the action InsertLid included in the action plan at this point?". The A-box that represents the initial state is denoted by A₀. To generate an appropriate explanation, the method and algorithm according to the present invention must first infer the state of the environment relevant to the InsertLid action. In a possible embodiment, it needs to simulate the application of the previous PickLid action, asserting effects to the initial state A₀. This leads to a state represented by an A-box A₁ as follows:

| | | |
|---|---|---|
| A₁ = | {lid1 := lid, | "lid1 is the same as lid" |
| | box1 := box, | "box1 is the same as box" |
| | robot1 := actor, | "robot1 is an the actor in the action" |
| | holds(actor, lid1), | "The machine holds the material(lid1)" |
| | ∃isConnectedTo.Lid(box) | "there exists some box which is connected to a lid" |
| | Manipulator(actor) } | "robot is of type Manipulator" |

At this point, the explanation mechanism does compute justifications for all the preconditions of the InsertLid action being fulfilled with respect to state A₁. This does justify to the user why the AI planning unit 2 did chose to apply the InsertLid action in A₁. The table below shows the respective justification as OWL axioms together with explanatory texts. After the interference, justification sets are constructed for the following entailments:
The following table illustrates a justification J₁ of the first precondition of the respective action:

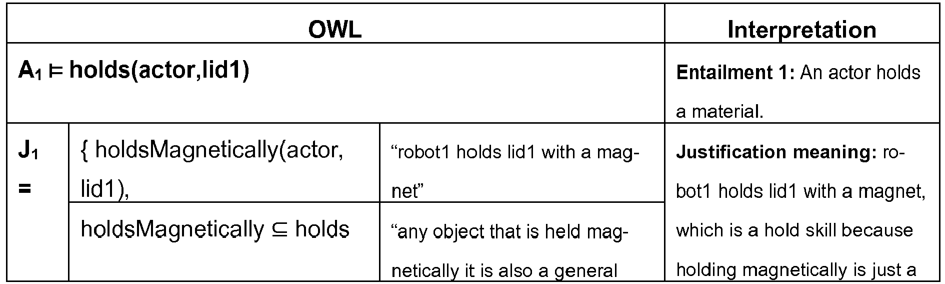

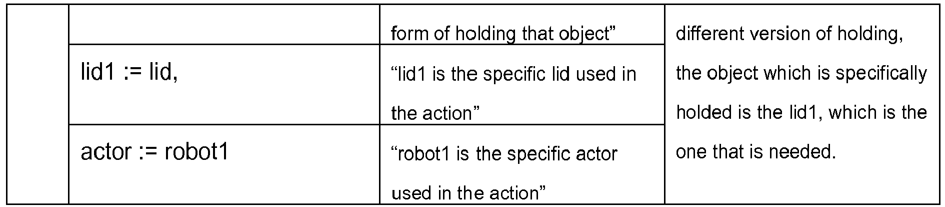

The following table illustrates the justification J₂ of the second precondition of the action:

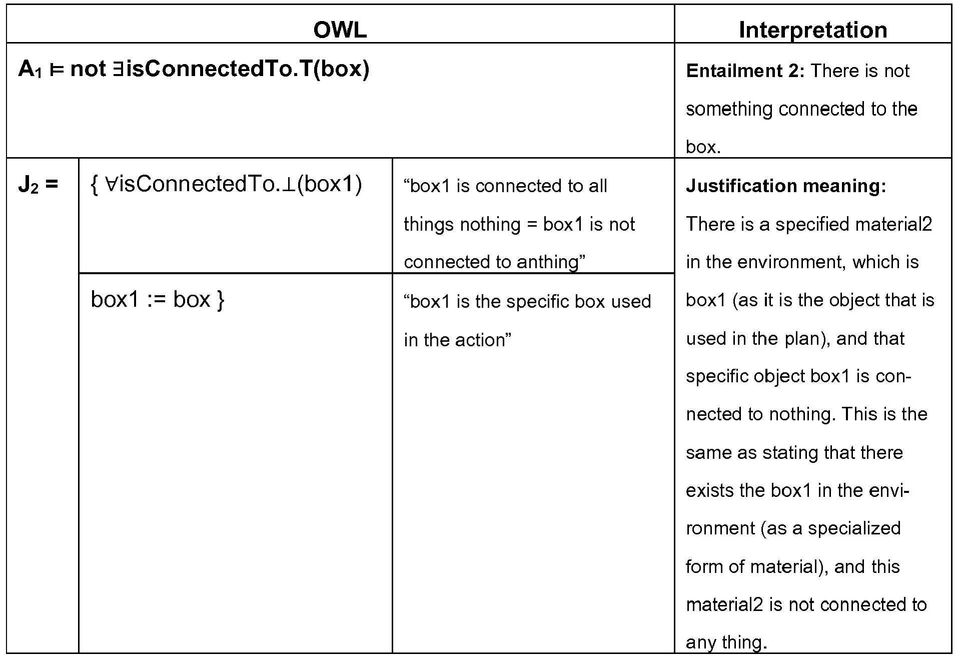

The following table illustrates a justification J₃ of the third precondition of the action:

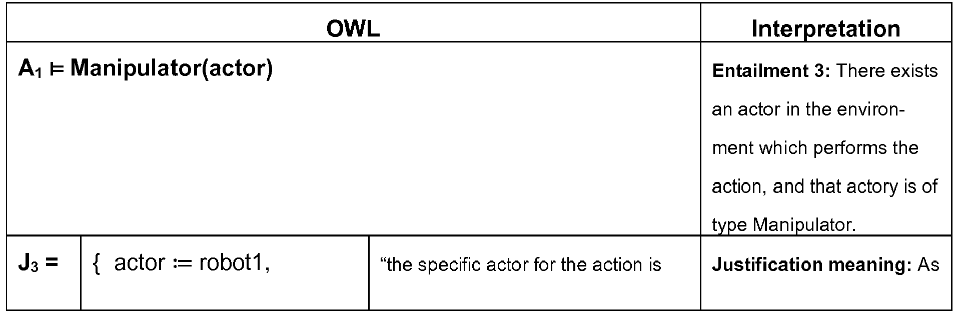

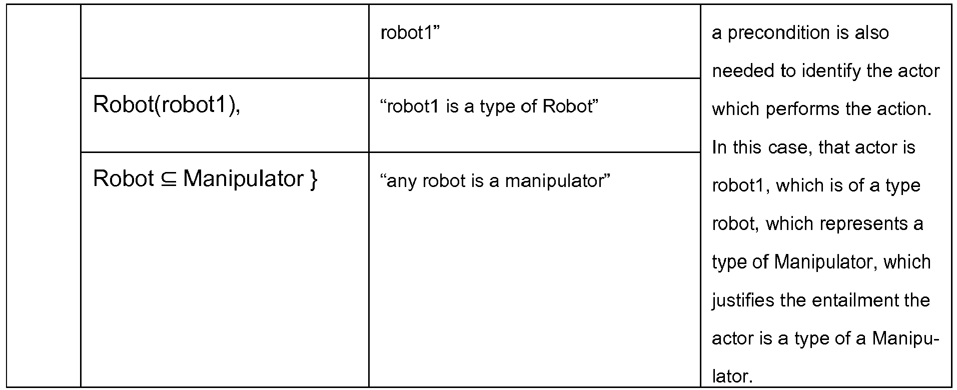

The actual explanation presented as transparency information to a user or to a controller can comprise a collection of the explanatory text in each justification from the above indicated tables. These texts can either be part of the ontology as hand-crafted annotations or they can be generated from the axioms on the fly by means of applying natural language, NL, processing techniques.

As can be deduced from the algorithm the collective justification J for the action can be determined as: J = J1 U J2 U J3.

The autonomous production system APS according to the present invention performs computation of the user and/or machine interpretable explanations of an action plan AP computed by an artificial intelligence, AI, planning unit. The autonomous production system APS makes use of ontological vocabularies together with OWL justification reasoning for a black-box explanation of PDDL action planning. The autonomous production system APS according to the present invention uses explanation mechanisms from the automated reasoning and ontology community (OWL justifications) to that of conventional action planning with PDDL.

The autonomous production system APS comprises a transformation unit which provides transformation between the ontology language (OWL) and the planning language (PDDL) which governs the representation of action knowledge within an ontology suitable for explanatory reasoning.

The autonomous production system APS provides for a mechanism for inferring any particular state of the environment (state of interest) from an instantiated action plan AP together with an initial system state. This does also allow for explanation of the actions at any point within the action plan.

The autonomous production system APS and method according to the present invention further provides a mechanism for generating explanations E in form of explanatory text from OWL justifications or the preconditions of any action. The mechanism exploits ontological domain vocabulary to make a planner's decisions transparent to a user without facing the difficulties connected to analyzing planner's internal computation.

The autonomous production system APS and method according to the present invention provides advantages that arise from explaining automated actions of autonomous production systems. In case of planning ahead of actual production sequences, explanations can be used to explore and optimize production workflows prior to the execution, supporting the task of production engineering.

In case of flexible autonomous plant set-ups where the autonomous production system APS takes decisions as to the next production steps, the explanations E can be utilized to increase transparency over such automated decisions. The plant operator or user can at any time be informed about the reasons for certain actions being taken (why-explanation) or about rejected alternative actions (why-not-explanations). This does increase the acceptance and trust in highly flexible automation solutions provided by the autonomous production system APS.

In case of non-producibility, i.e. a situation where no sequence of actions can be found for achieving the desired goal or goal state given by the target product, the explanations can also help a user or engineers to investigate reasons for the non-producibility, thus supporting product engineering as well as production engineering tasks. The autonomous production system APS according to the present invention makes its internal decisions and/or actions transparent to a user by generating automatically explanations. For example, the autonomous production system APS can give an explanation E of why an assembly robot changed its tool prior to fastening a screw. A possible explanation could be that the current tool was not compatible with the required type of screw. In a possible embodiment, the explanations E output to the user can assist the user in controlling the autonomous production system. If the user is satisfied with the received explanation E, he may not interfere with the autonomous production system APS while executing the action plan AP. If the action plan AP is executed in a specific operation mode step by step, the user may decide depending on the given explanation E for the next instantiated action whether the action is to be performed or not. In a still further possible embodiment, the user may have the possibility to overrule an instantiated action if the given explanation E is not satisfactory. In a possible embodiment the user may interrupt the sequence of instantiated actions if the calculated explanations E for one or more of the instantiated actions is not satisfactory. In a still further embodiment, the user may input that given explanation is satisfactory or not satisfactory. Depending on the user input, the calculated action plan AP may be executed or not. In a still further embodiment, if the explanation E for an instantiated action is not satisfactory to a user, the artificial intelligence, AI, planning unit 2 can be triggered by the process to calculate an alternative action plan and to provide transparency information about the adapted action plan. According to a possible embodiment, the user receives explanations E about the computed action plan AP as an observer without interfering with the autonomous production system APS. In an alternative embodiment, the user can give a feedback on the received explanations E to interfere with the execution of the computed action plan AP.

## Claims

1. An autonomous production system (APS) comprising:
a transformation unit (1) adapted to transform an ontology representation of actions of the autonomous production system into a corresponding planning representation;
an artificial intelligence, AI, planning unit (2) adapted to compute an action plan (AP) comprising a sequence of instantiated actions (a) based on the planning representation; and
a retransformation unit (3) adapted to transform the computed action plan (AP) into an ontology language representation (oAP) providing transparency information about the computed action plan (AP).

2. The autonomous production system according to claim 1 wherein said planning representation comprises a planning domain definition language (PDDL) representation and said ontology representation comprises a web ontology language, OWL, representation.

3. The autonomous production system according to claim 1 or 2 wherein the transformation unit (1) and retransformation unit (2) have access to a mapping memory (8) which stores a mapping table of mappings between the ontology representation of actions and a corresponding planning representation of actions.

4. The autonomous production system according to claim 3 wherein each action (a) within the table stored in said memory (8) comprises in the ontology representation and in the planning representation
at least one action precondition,
action parameters and
at least one action effect.

5. The autonomous production system according to any of the preceding claims 1 to 4 wherein an ontology of a domain of the autonomous production system (APS) stored in a memory (4) comprises a representation of states of a do-main of said autonomous production system (APS) including an initial state and a goal state.

6. The autonomous production system according to claim 5 wherein a state evolution unit (5) is configured to evolve the initial state of the domain by applying the instantiated actions of the computed action plan (AP) transformed into its ontology representation into an intermediate state of interest of the domain queried by a user.

7. The autonomous production system according to claim 6 wherein a logical reasoning unit (6) is configured to compute explanatory justifications (7) for the preconditions of the instantiated actions applied by the state evolution unit (5).

8. The autonomous production system according to claim 7 wherein an explanation generation unit (7) is configured to generate automatically the transparency information comprising human readable explanation text output via a user interface and/or a machine readable explanation file output via a data interface (12) on the basis of the explanatory justifications (7) computed by the logical reasoning unit.

9. The autonomous production system according to claim 8 wherein said explanation generation unit (7) is adapted to perform natural language processing of the justifications (7) computed by said logical reasoning unit (6) to generate automatically an explanation text (E) output via the user interface (12) to a user of the autonomous production system (1).

10. The autonomous production system according to any of the preceding claims 1 to 9 wherein the action plan (AP) computed by the AI planning unit (2) comprising a sequence of instantiated actions (a) is executed by an execution engine (9) of said autonomous production system (1).

11. The autonomous production system according to claim 10 wherein the transparency information generated by said explanation generation unit (7) is evaluated to trigger the execution of the action plan (AP) by said execution engine (9).

12. The autonomous production system according to any of the preceding claims 1 to 11 wherein the transparency information comprises explanations (E) indicating at least one reason for a specific action being included or not being included in the action plan (AP) computed by said AI planning unit (2).

13. A method for providing transparency in an autonomous production system (APS), the method comprising the steps of:
(a) transforming (S1) an ontology representation of actions to be performed by the autonomous production system (APS) into a corresponding planning representation;
(b) computing (S2) by an AI planning unit an action plan (AP) comprising a sequence of instantiated actions based on the planning representation of the actions;
(c) transforming (S3) the computed action plan (AP) into an ontology representation (OAP) process to provide automatically transparency information about the computed action plan (AP).

14. The method according to claim 13 comprising evolving an initial state of a domain of said autonomous production system (APS) into an intermediate state of interest of the domain specified by a user by applying the sequence of instantiated actions of the computed action plan (AP) to the initial state.

15. The method according to claim 13 or 14 further comprising computing explanatory justifications (7) for preconditions of the instantiated actions applied to evolve the initial state into an intermediate state of interest.

16. The method according to claim 15 wherein the computed explanatory justifications (7) are processed to generate automatically explanations (E) as transparency information comprising reasons for actions being or not being included in the computed action plan (AP).
